# EUROPEAN PATENT APPLICATION

(11) **EP 4 593 050 A1**
(43) Date of publication of application: **30.07.2025**
(21) Application number: 24217837.4
(22) Date of filing: 05.12.2024
(51) Int. Cl.: H01G 11/74, H01G 11/80, H01G 11/82, H01M 50/15, H01M 50/176, H01M 50/188, H01M 50/555, H01M 50/564

(54) **POWER STORAGE DEVICE AND METHOD OF MANUFACTURING THE POWER STORAGE DEVICE**

(30) Priority: 29.01.2024 JP 2024011096
(71) Applicant: Prime Planet Energy & Solutions, Inc., Chuo-ku, Tokyo 103-0022 (JP)
(72) Inventor: UCHIDA, Yozo, Tokyo, 103-0022 (JP); FUJIMURA, Satoshi, Tokyo, 103-0022 (JP)
(74) Representative: Kuhnen & Wacker Patent- und Rechtsanwaltsbüro PartG mbB

(57) **Abstract**

A power storage device (1) includes a case member (25), a terminal member (40), and a resin member (50) that is hermetically joined to these members while insulating them from each other. The resin member (50) includes a thermoplastic main resin (56) and a fibrous filler (58) consisting of numerous fibers. The resin member (50) has a resin inner portion (52) and a resin outer portion (51), and at least one of a resin inner surface (52b) facing the inside (EH) and a resin joint surface (52a) facing the outside (DH) of the resin inner portion (52) is provided with an uneven region (52w), and molding of the uneven region (52w) causes variation in the direction of the fibers of the filler (58) included in the resin inner portion (52).

## Description

### BACKGROUND

### Technical Field

The disclosure relates to a power storage device in which a terminal member is fixed to a case member that constitutes a case, via a resin member including a fibrous filler consisting of numerous fibers, and also relates to a method of manufacturing the power storage device.

### Related Art

As a power storage device, a battery is known in which positive and negative terminal members are fixed via respective resin members to a case lid member (a case member) in the form of a rectangular plate that constitutes a case in the form of a rectangular parallelepiped box. More specifically, each of the positive and negative terminal members is inserted through an insertion hole provided in the case lid member, and extends from the inside of the case to the outside, and the resin member is joined to the case lid member and the terminal member while insulating the case lid member and the terminal member from each other, to fix the terminal member to the case lid member.

When manufacturing the battery as described above, the resin member may be subjected to insert molding. Specifically, in a condition where the terminal member is inserted through the insertion hole of the case lid member, the resin member is insert-molded so that the terminal member is fixed via the resin member to the case lid member. One example of the related art is described in the Patent Document 1.

### Related Art Documents

### Patent Documents

Patent Document 1: JP2022-079172 A

### SUMMARY

### Technical Problems

In the battery as described above, a fibrous filler consisting of numerous glass fibers, numerous carbon fibers, or the like, may be added to a resin material that forms the resin member, so as to improve the strength of the resin member, and make the linear expansion coefficient of the resin material closer to the linear expansion coefficient of metal that forms the case member and the terminal member.

However, during insert molding, the fibrous filler included in the molten resin is likely to be oriented along the flow of the molten resin (i.e., the fibers of the filler are likely to be oriented so that the longitudinal direction of the fibers of the filler is parallel to the flow of the molten resin); therefore, the filler is also likely to be oriented in this way in the resin member after molding. When the filler is oriented in a certain direction in the resin member, anisotropy undesirably arises in the characteristics (such as the linear expansion coefficient and the strength) of the resin member, between the direction parallel to the direction of orientation of the fibrous filler and the direction perpendicular to the orientation direction of the filler. It has been found that, when the battery is subjected to a cold-heat cycle test, for example, cracking (seal failure) may occur between the resin member and the case member or terminal member, depending on the relationship between the direction of stress generated between the resin member and the case member or terminal member and the orientation direction.

The disclosure was made in view of the situation as described above, and provides a power storage device with less anisotropy in the characteristics (such as the linear expansion coefficient and the strength) of a resin member that fixes a terminal member to a case member, and a method of manufacturing the power storage device.

### Means of Solving the Problems

(1) One aspect of the disclosure for solving the above problem is a power storage device including a case member including an insertion hole, a terminal member inserted through the insertion hole of the case member, and a resin member that is hermetically joined to the case member and the terminal member while insulating the case member and the terminal member from each other, to fix the terminal member to the case member, the resin member comprising a resin material including a thermoplastic main resin and a fibrous filler consisting of numerous fibers and subjected to insert molding. In the power storage device, the resin member has a resin inner portion located on the inside of the case member, and a resin outer portion that extends from the resin inner portion to the outside of the case member through the insertion hole, and the resin inner portion has a resin inner surface that faces the inside and a resin joint surface that faces the outside and is joined to the case member. In the power storage device, at least one of the resin inner surface and the resin joint surface of the resin inner portion is provided with an uneven region, and molding of the uneven region causes variation in the direction of the fibers of the filler included in the resin inner portion.

In the power storage device described above, at least one of the resin inner surface and the resin joint surface of the resin inner portion of the resin member is provided with the uneven region, and molding of the uneven region causes variation in the direction of the fibers of the filler included in the resin inner portion. Therefore, the direction of the fibers of the filler in the resin inner portion is more varied compared to the case where no uneven region is provided. Specifically, the degree of orientation of the filler in each section of the resin inner portion (the ratio of the fibers oriented in a particular direction to the numerous fibers of the filler included in each section) is reduced (i.e., the amount of the fibers oriented in a particular direction in each section of the resin inner portion is reduced). Also, the filler does not have a similar direction of orientation between adjacent sections of the resin inner portion, but the orientation direction of the filler varies with a small change in the position of the section. Accordingly, the power storage device has less anisotropy in the characteristics (such as the linear expansion coefficient and the strength) of the resin member, compared to the case where the uneven region described above is not provided.

Examples of the "power storage device" include secondary batteries, such as a lithium-ion secondary battery, sodium-ion secondary battery, and a calcium-ion secondary battery, and capacitors, such as a lithium-ion capacitor.

The term "main resin" refers to a resin component that makes up the resin material and has the highest weight ratio. Examples of thermoplastic resin that can be used as the main resin include polyphenylene sulfide (PPS), polyetheretherketone (PEEK), polytetrafluoroethylene (PTFE), and perfluoroalkoxyalkane (PFA).

Examples of the fibers of the "fibrous filler" include glass fibers and carbon fibers.

The resin material may further include a component or components, such as a thermoplastic elastomer, other than the thermoplastic main resin and the fibrous filler.

(2) In the power storage device described in (1) above, the uneven region may be composed of numerous bumps and dips that are arranged in a zigzag pattern.

With the numerous bumps and dips that make up the uneven region arranged in the zigzag pattern or staggered pattern, the direction of the fibers of the filler included in the resin inner portion is further varied due to molding of the uneven region. Accordingly, in the power storage device, the characteristics of the resin member in particular has little anisotropy.

(3) Another aspect of the disclosure is a method of manufacturing a power storage device including a case member including an insertion hole, a terminal member inserted through the insertion hole of the case member, and a resin member that is hermetically joined to the case member and the terminal member while insulating the case member and the terminal member from each other, to fix the terminal member to the case member, the resin member comprising a resin material including a thermoplastic main resin and a fibrous filler consisting of numerous fibers and subjected to insert molding, wherein the resin member has a resin inner portion located on the inside of the case member, and a resin outer portion that extends from the resin inner portion to the outside of the case member through the insertion hole, the resin inner portion having a resin inner surface that faces the inside and a resin joint surface that faces the outside and is joined to the case member, and wherein at least one of the resin inner surface and the resin joint surface of the resin inner portion is provided with an uneven region and molding of the uneven region causes variation in the direction of the fibers of the filler included in the resin inner portion. The method includes an insert molding process of performing the insert molding of the resin member using the resin material in a condition where the terminal member is inserted through the insertion hole of the case member. The insert molding process includes a cavity forming process of forming a cavity for molding the resin member by a molding die, the case member, and the terminal member, and an injection molding process of injecting a molten resin of the resin material into the cavity to fill the cavity with the molten resin and mold the resin member. The cavity has an outer portion molding cavity for molding the resin outer portion and an inner portion molding cavity for molding the resin inner portion, and an inner portion molding surface that defines the inner portion molding cavity has a bump and dip molding portion with which the uneven region is molded. The injection molding process includes molding the resin inner portion having the uneven region, while causing the bump and dip molding portion to disturb flow of the molten resin and vary the direction of the fibers of the filler included in the molten resin.

In the method of manufacturing the power storage device described above, in the insert molding process, the bump and dip molding portion provided on the inner portion molding surface that defines the inner portion molding cavity disturbs the flow of the molten resin and varies the direction of the fibers of the filler included in the molten resin. Therefore, the resin member with greater variation in the direction of the fibers of the filler can be molded compared to the case where the bump and dip molding portion is not provided on the inner portion molding surface. Thus, the power storage device with less anisotropy in the characteristics of the resin member can be manufactured.

When the uneven region is provided on the resin inner surface of the resin inner portion of the resin member, the bump and dip molding portion is provided, for example, on the molding die used in the insert molding process, as will be described below in a first embodiment. Specifically, the bump and dip molding portion is provided on a portion provided by the molding die, of the inner portion molding surface that defines the inner portion molding cavity. Alternatively, the bump and dip molding portion may be provided on a portion of the terminal member joined to the resin inner surface, as will be described below in a third embodiment. Specifically, the bump and dip molding portion may be provided on a portion provided by the terminal member, of the inner portion molding surface that defines the inner portion molding cavity.

On the other hand, when the uneven region is provided on the resin joint surface of the resin inner portion of the resin member, the bump and dip molding portion is provided on a portion of the case member joined to the resin inner portion, as will be described below in a second embodiment. Specifically, the bump and dip molding portion is provided on a portion provided by the case member, of the inner portion molding surface that defines the inner portion molding cavity.

(4) In the method of manufacturing the power storage device described in (3) above, the uneven region may be composed of numerous bumps and dips that are arranged in a zigzag pattern, and the bump and dip molding portion may be composed of numerous bump molding portions and dip molding portions that are arranged in a zigzag pattern.

In the method of manufacturing the power storage device described above, the numerous bump molding portions and dip molding portions that make up the bump and dip molding portion are arranged in the zigzag pattern or staggered pattern; therefore, the direction of the fibers of the filler in the molten resin can be further varied, and the resin member in which the direction of the fibers of the filler is further varied can be molded. Thus, the power storage device with less anisotropy in the characteristics of the resin member in particular can be manufactured.

### BRIEF DESCRIPTION OF THE DRAWINGS

FIG. 1 is a perspective view of a battery according to a first embodiment;
FIG. 2 is a partial cross-sectional view of the battery according to the first embodiment, taken along the battery height direction and the battery width direction;
FIG. 3 is a cross-sectional view of a resin member and its vicinity according to the first embodiment, taken along the battery height direction and the battery width direction, which is a cross-sectional view as seen in the direction of arrows A-A in FIG. 5;
FIG. 4 is a cross-sectional view of the resin member and its vicinity according to the first embodiment, taken along the battery height direction and the battery thickness direction, which is a cross-sectional view as seen in the direction of arrows B-B in FIG. 5;
FIG. 5 is a plan view of the resin member and its vicinity according to the first embodiment, as seen from the inside of a case lid member;
FIG. 6 is a flowchart of a method of manufacturing the battery according to the first embodiment;
FIG. 7 is an explanatory view showing the manner of injecting molten resin into a cavity in an insert molding step, in connection with the method of manufacturing the battery according to the first embodiment;
FIG. 8 is an explanatory view showing the manner of molding the resin member in the insert molding step, in connection with the method of manufacturing the battery according to the first embodiment;
FIG. 9, which corresponds to FIG. 3, is a cross-sectional view of a resin member and its vicinity according to a second embodiment, taken along the battery height direction and the battery width direction;
FIG. 10, which corresponds to FIG. 7, is an explanatory view showing the manner of injecting molten resin into a cavity in an insert molding step, in connection with a method of manufacturing a battery according to the second embodiment;
FIG. 11, which corresponds to FIG. 3, is a cross-sectional view of a resin member and its vicinity according to a third embodiment, taken along the battery height direction and the battery width direction; and
FIG. 12, which corresponds to FIG. 7, is an explanatory view showing the manner of injecting molten resin into a cavity in an insert molding step, in connection with a method of manufacturing a battery according to the third embodiment.

### DETAILED DESCRIPTION OF THE EXEMPLARY EMBODIMENTS

### First Embodiment

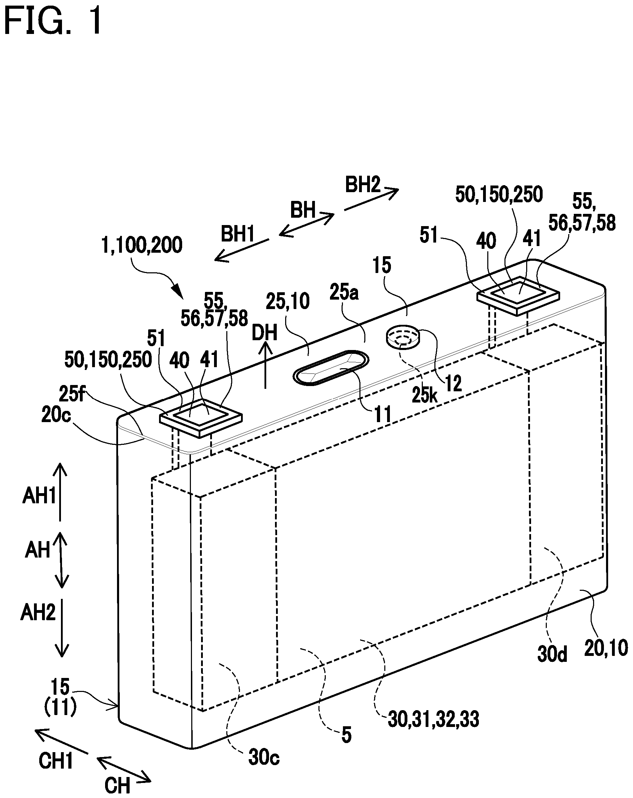

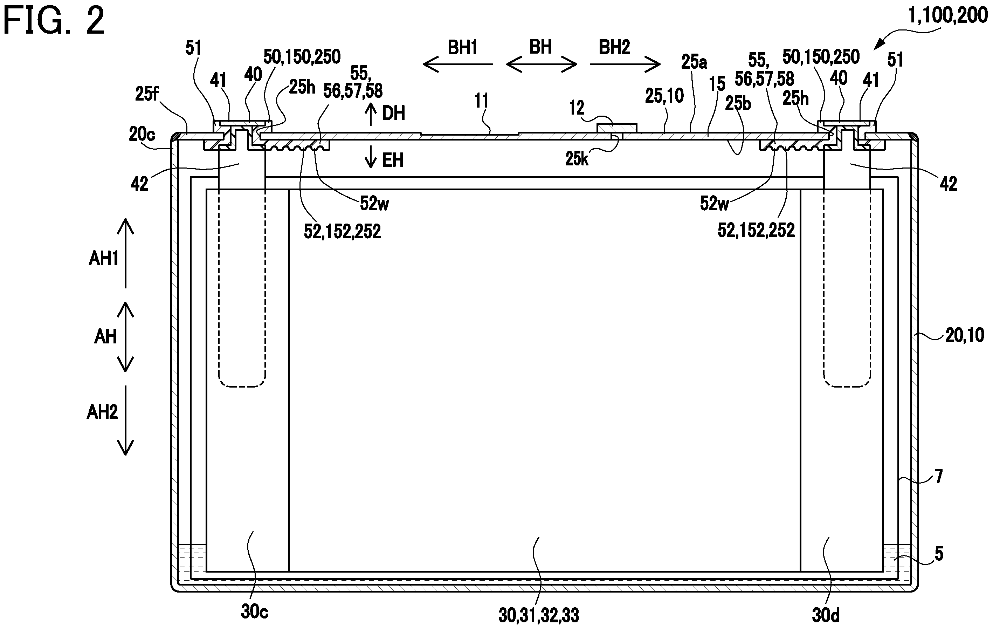

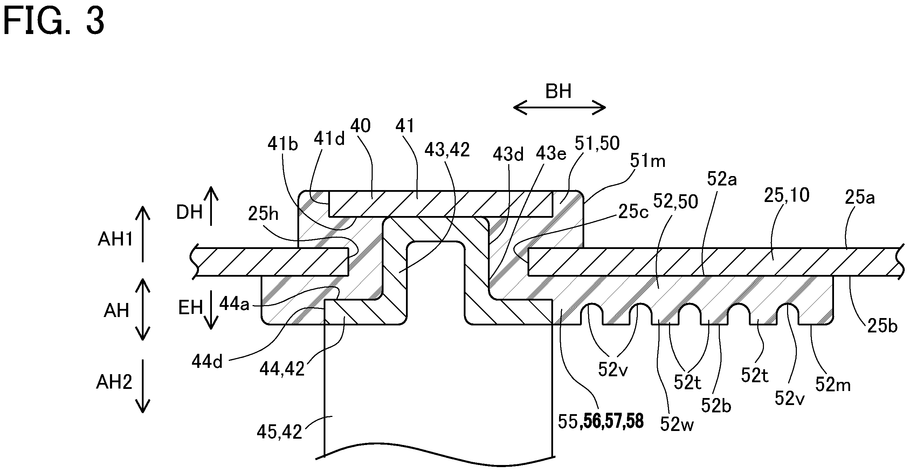

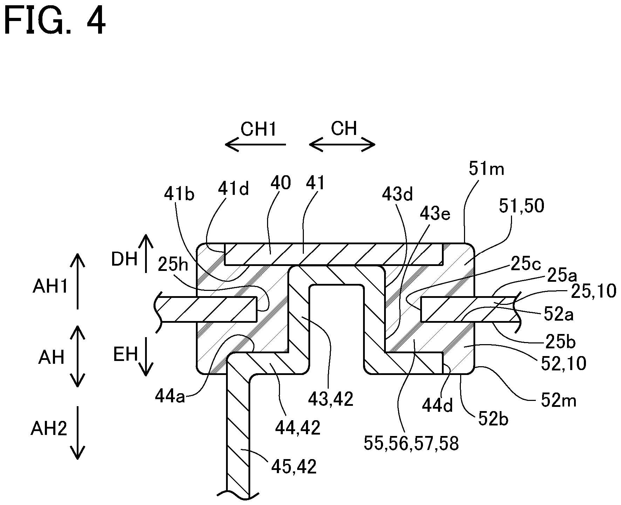

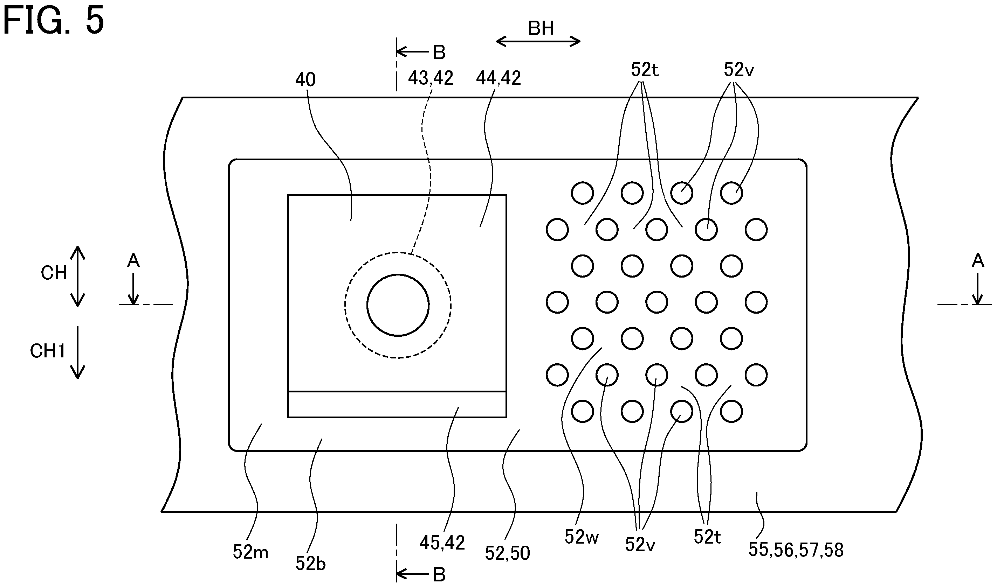

In the following, a first embodiment of the disclosure will be described with reference to the drawings. FIG. 1 is a perspective view of a battery (one example of the power storage device of the disclosure) 1 according to the first embodiment, and FIG. 2 is a partial cross-sectional view of the battery 1. FIG. 3 and FIG. 4 are enlarged cross-sectional views of a resin member 50 and its vicinity, and FIG. 5 is an enlarged plan view of the resin member 50 and its vicinity as seen from the inside EH. In the following description, the battery height direction AH, battery width direction BH, and battery thickness direction CH of the battery 1 are defined as the directions indicated in FIG. 1 and FIG. 2.

The battery 1 is a sealed lithium-ion secondary battery of a rectangular (rectangular parallelepiped) shape, which is installed on a vehicle, such as a hybrid vehicle, plug-in hybrid vehicle, or an electric vehicle. The battery 1 consists of a case 10, an electrode body 30 and electrolyte 5 housed in the case 10, positive and negative terminal members 40 fixed to the case 10 via respective resin members 50, and so forth. In the case 10, the electrode body 30 is covered with a bag-shaped insulating holder 7 formed from an insulating film.

The case 10 is shaped like a rectangular parallelepiped box and made of metal (aluminum in the first embodiment). The case 10 consists of a case body 20 that is in the form of a rectangular tube with a bottom and a rectangular opening portion 20c and houses the electrode body 30 therein, and a case lid member 25 that is in the form of a rectangular plate and closes the opening portion 20c of the case body 20. In the first embodiment, the case lid member 25 corresponds to the "case member" mentioned above. The opening portion 20c of the case body 20 and a peripheral portion 25f of the case lid member 25 are hermetically welded together over the entire circumference thereof. The case lid member 25 is provided with a safety valve 11 that fractures and opens when the internal pressure of the case 10 exceeds the valve opening pressure. The case lid member 25 is also provided with a liquid inlet 25k, and the liquid inlet 25k is hermetically sealed with a disc-shaped sealing member 12 made of aluminum.

The electrode body 30 is of a rectangular parallelepiped, stacked type, and has a plurality of rectangular positive electrode sheets 31 and a plurality of rectangular negative electrode sheets 32 alternately stacked in the battery thickness direction CH via rectangular separators 33 in the form of porous films made of resin. In the electrode body 30, on one side BH1 in the battery width direction BH, current collecting foils of the respective positive electrode sheets 31 are superposed in the battery thickness direction CH to form a positive current collector 30c. The terminal member 40 of the positive electrode is conductively connected to the positive current collector 30c. Also in the electrode body 30, on the other side BH2 in the battery width direction BH, current collecting foils of the respective negative electrode sheets 32 are superposed in the battery thickness direction CH to form a negative current collector 30d. The terminal member 40 of the negative electrode is conductively connected to the negative current collector 30d.

Circular insertion holes 25h are respectively provided in portions of the case lid member 25 near its ends on one side BH1 and the other side BH2 in the battery width direction BH. The terminal member 40 of the positive electrode made of aluminum is inserted through the insertion hole 25h on the one side BH1, and the terminal member 40 is fixed to the case lid member 25 via the resin member 50 while being insulated from the case lid member 25. The terminal member 40 of the negative electrode made of copper is inserted through the insertion hole 25h on the other side BH2, and the terminal member 40 is fixed to the case lid member 25 via the resin member 50 while being insulated from the case lid member 25.

The positive and negative terminal members 40 have substantially the same configuration; therefore, they will be described collectively below. The terminal member 40 is formed by welding and integrating a terminal outer portion (terminal outer member) 41 and a terminal inner portion (terminal inner member) 42. The terminal outer portion 41 is in the form of a rectangular plate extending in the battery width direction BH and the battery thickness direction CH, and is located on the outside DH of the case lid member 25 (the upper side AH1 in the first embodiment).

On the other hand, the terminal inner portion 42 is mainly located on the inside EH of the case lid member 25 (the lower side AH2 in the first embodiment), and passes through the insertion hole 25h to connect to the terminal outer portion 41. The terminal inner portion 42 consists of a plate-like flange 44, a cylindrical protrusion 43 with a bottom which protrudes from a central portion of the flange 44 to the upper side AH1, and an extension 45 that extends from the flange 44 to the lower side AH2. The flange 44 has a rectangular outer periphery and a circular hole in the middle, and is positioned in parallel with the case lid member 25. The protrusion 43 protrudes to the outside DH through the insertion hole 25h, and is welded at its own bottom to the terminal outer portion 41. The extension 45 bends at an end portion of the flange 44 on one side CH1 in the battery thickness direction CH and extends to the lower side AH2. The terminal member 40 of the positive electrode is welded at a distal end portion of the extension 45 to the positive current collector 30c of the electrode body 30, to be conductively connected to the positive current collector 30c. The terminal member 40 of the negative electrode is welded at a distal end portion of the extension 45 to the negative current collector 30d of the electrode body 30, to be conductively connected to the negative current collector 30d.

Next, the resin member 50 will be described. The resin member 50 of the positive electrode is hermetically joined to the case lid member 25 and the terminal member 40 of the positive electrode while insulating the case lid member 25 and the terminal member 40 from each other, to fix the terminal member 40 to the case lid member 25. The resin member 50 of the negative electrode is hermetically joined to the case lid member 25 and the terminal member 40 of the negative electrode while insulating the case lid member 25 and the terminal member 40 from each other, to fix the terminal member 40 to the case lid member 25. The resin members 50 of the positive electrode and negative electrode have substantially the same configuration; therefore, they will be described collectively below.

The resin member 50 is made of a resin material 55 including a thermoplastic main resin 56, a thermoplastic elastomer 57, and a fibrous filler 58. In the first embodiment, the thermoplastic main resin 56 is polyphenylene sulfide (PPS), the thermoplastic elastomer 57 is a thermoplastic polyurethane elastomer, and the fibrous filler 58 consists of numerous glass fibers with a diameter of approximately 10 µm and a length of approximately 300 µm. The weight ratio of the main resin 56, elastomer 57, and filler 58 is 40 : 10 : 50 (main resin : elastomer : filler).

The resin member 50 consists of a resin inner portion 52 located on the inside EH of the case lid member 25, and a resin outer portion 51 that extends from the resin inner portion 52 to the outside DH of the case lid member 25 through the insertion hole 25h. The resin outer portion 51 surrounds the terminal outer portion 41 and insulates the terminal outer portion 41 and the case lid member 25 from each other. The resin outer portion 51 also surrounds an upper part outer circumferential surface 43d on the upper side AH1 of the protrusion 43 as a part of the terminal inner portion 42, and insulates the upper part outer circumferential surface 43d of the protrusion 43 and the case lid member 25 from each other.

On the other hand, the resin inner portion 52 is in the form of a generally rectangular plate having a longer dimension in the battery width direction BH than that in the battery thickness direction CH. The resin inner portion 52 surrounds a lower part outer circumferential surface 43e on the lower side AH2 of the protrusion 43 as a part of the terminal inner portion 42 and insulates the lower part outer circumferential surface 43e of the protrusion 43 and the case lid member 25 from each other. The resin inner portion 52 also surrounds the flange 44 of the terminal inner portion 42 and insulates the flange 44 and the case lid member 25 from each other.

The resin inner portion 52 has a resin inner surface 52b that faces the inside EH and a resin joint surface 52a that faces the outside DH and is joined to the case lid member 25. The resin inner surface 52b includes a portion exposed to the interior of the case 10, and a portion joined to an outer surface 44a of the flange 44 of the terminal member 40. In the first embodiment, the resin inner surface 52b, out of the resin joint surface 52a and the resin inner surface 52b, is provided with an uneven region 52w. The uneven region 52w is formed in an area of 20% or more (an area of approximately 50% in the first embodiment) of the entire area of the resin inner surface 52b. Numerous bumps 52t and dips 52v that make up the uneven region 52w are arranged in a zigzag pattern (see FIG. 5). As will be described below, molding of the uneven region 52w causes variation in the direction of numerous glass fibers of the filler 58 included in the resin inner portion 52 of the resin member 50.

In the battery 1 as described above, the uneven region 52w is provided on the resin inner surface 52b of the resin inner portion 52 of the resin member 50, and molding of the uneven region 52w causes variation in the direction of the glass fibers of the filler 58 included in the resin inner portion 52. Thus, the direction of the glass fibers of the filler 58 in the resin inner portion 52 is more varied compared to the case where the uneven region 52w is not provided. More specifically, in each part of the resin inner portion 52, the amount of the glass fibers of the filler 58 oriented in a particular direction (the battery width direction BH in the first embodiment) is reduced. In addition, the orientation direction of the filler 58 is not the same in neighboring parts of the resin member 50, but the orientation direction of the filler 58 varies between parts of the resin member 50 near the bumps 52t and adjacent parts of the resin member 50 near the dips 52v, for example. Accordingly, the battery 1 has less anisotropy in characteristics (e.g., the linear expansion coefficient and the strength) of the resin member 50 compared to the case where there is no uneven region 52w.

Furthermore, in the first embodiment, the numerous bumps 52t and dips 52v that make up the uneven region 52w are arranged in the zigzag pattern. Therefore, the direction of the glass fibers of the filler 58 included in the resin inner portion 52 is further varied due to molding of the uneven region 52w. Accordingly, the battery 1 has particularly small anisotropy in the characteristics of the resin member 50.

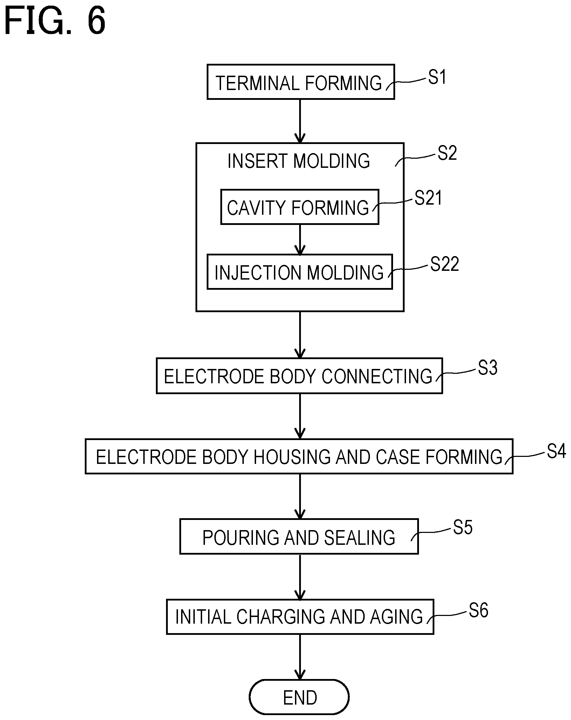

Next, a method of manufacturing the battery 1 will be described (see FIG. 6 to FIG. 8). The case lid member 25 and the terminal outer portions 41 and terminal inner portions 42 of the positive and negative electrodes are prepared in advance. Then, in "terminal forming step S1" (see FIG. 6), the positive and negative terminal members 40 are formed. Specifically, in a pair of insertion holes 25h of the case lid member 25, the protrusions 43 of the positive and negative terminal inner portions 42 are inserted from the inside EH of the case lid member 25 to the outside DH. Then, the positive and negative terminal outer portions 41 are brought into abutment with the bottoms of the protrusions 43 from the outside DH of the case lid member 25, and the protrusions 43 and the terminal outer portions 41 are laser-welded together, to form the positive and negative terminal members 40. The terminal members 40 are inserted in the insertion holes 25h of the case lid member 25.

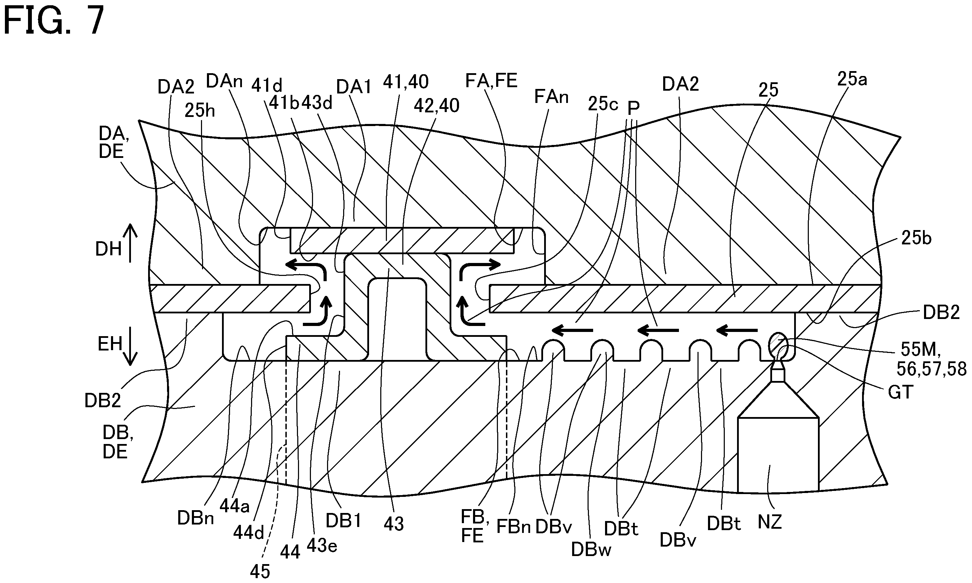

Then, in "insert molding step S2" (see FIG. 6), in a condition where the positive and negative terminal members 40 are inserted in the pair of insertion holes 25h of the case lid member 25, a pair of resin members 50 is insert-molded using the resin material 55 described above. The insert molding step S2 is carried out using a molding die DE having an upper die DA and a lower die DB (see FIG. 7). The upper die DA has a pair of (on the positive electrode side and negative electrode side) outer surface molding portions DA1 each of which forms an exposed surface 51m of the resin outer portion 51 of the corresponding resin member 50, and an outer lid adhesion portion DA2 that surrounds the outer surface molding portions DA1 and extends radially outwards, to be opposed to and adhere to an outer surface 25a of the case lid member 25. On the other hand, the lower die DB has a pair of (on the positive electrode side and negative electrode side) inner surface molding portions DB 1 each of which forms an exposed surface 52m of the resin inner portion 52 of the corresponding resin member 50, and an inner lid adhesion portion DB2 that surrounds the inner surface molding portions DB 1 and extends radially outwards, to be opposed to and adhere to the inner surface 25b of the case lid member 25.

In the insert molding step S2, the molding die DE, case lid member 25, and the pair of terminal members 40 form a pair of cavities FE for molding the pair of resin members 50. Each of the cavities FE consists of an outer portion molding cavity FA for molding the resin outer portion 51 of the corresponding resin member 50, and an inner portion molding cavity FB for molding the resin inner portion 52 of the resin member 50.

The outer portion molding cavity FA is formed by the upper die DA, the case lid member 25, and the terminal outer portion 41 and the upper part of the protrusion 43 of the terminal inner portion 42 of the terminal member 40. More specifically, an outer portion molding surface FAn that defines the outer portion molding cavity FA consists of an outer molding surface DAn of the outer surface molding portion DA1 of the upper die DA, the outer surface 25a and an inner circumferential surface 25c defining the insertion hole 25h, of the case lid member 25, inner surface 41b and outer circumferential surface 41d of the terminal outer portion 41, and the upper part outer circumferential surface 43d of the protrusion 43 of the terminal inner portion 42.

On the other hand, the inner portion molding cavity FB is formed by the lower die DB, the case lid member 25, and the flange 44 and the lower part of the protrusion 43 of the terminal inner portion 42 of the terminal member 40. More specifically, an inner portion molding surface FBn that defines the inner portion molding cavity FB consists of an inner molding surface DBn of the inner surface molding portion DB 1 of the lower die DB, the inner surface 25b of the case lid member 25, the outer surface 44a and outer circumferential surface 44d of the flange 44 of the terminal inner portion 42, and the lower part outer circumferential surface 43e of the protrusion 43 of the terminal inner portion 42. Of these surfaces, the inner molding surface DBn of the inner surface molding portion DB1 has a bump and dip molding portion DBw for molding the uneven region 52w of the resin inner portion 52 of the resin member 50. The bump and dip molding portion DBw has numerous bump molding portions DBt for molding the numerous bumps 52t, and numerous dip molding portions DBv for molding the numerous dips 52v, and the bump molding portions DBt and the dip molding portions DBv are arranged in a zigzag pattern.

A pair of injection nozzles NZ is placed in the lower die DB, and each injection nozzle NZ is configured to be able to inject the molten resin 55M of the resin material 55 from a gate GT formed at a distal end of the injection nozzle NZ into the corresponding inner portion molding cavity FB. Since the inner portion molding cavity FB and the outer portion molding cavity FA are connected in the insertion hole 25h, the molten resin 55M injected into the inner portion molding cavity FB flows through the insertion hole 25h, and fills the outer portion molding cavity FA as well as the inner portion molding cavity FB, as indicated by arrows P denoting the flow of the molten resin 55M in FIG. 7.

In the insert molding step S2, a cavity forming step S21 is carried out, and an injection molding step S22 is then carried out (see FIG. 6).

First, in the cavity forming step S21, the pair of cavities FE for molding the pair of resin members 50 is formed by the molding die DE, case lid member 25, and the pair of terminal members 40 (see FIG. 7). Specifically, the case lid member 25 and the positive and negative terminal members 40 described above are placed at predetermined positions in the lower die DB. Then, the upper die DA is moved down toward the lower die DB and is superposed on the lower die DB to close the molding die DE. At this time, a part of the outer surface molding portion DA1 of the upper die DA is opposed to and adheres to the terminal outer portion 41 of the terminal member 40, and the outer lid adhesion portion DA2 is opposed to and adheres to the outer surface 25a of the case lid member 25. As a result, the outer portion molding cavity FA as a part of the cavity FE is formed. Also, a part of the inner surface molding portion DB 1 of the lower die DB is opposed to and adheres to the flange 44 of the terminal inner portion 42 of the terminal member 40, and the inner lid adhesion portion DB2 is opposed to and adheres to the inner surface 25b of the case lid member 25. As a result, the inner portion molding cavity FB as a part of the cavity FE is formed.

Subsequently, in the injection molding step S22, the molten resin 55M of the resin material 55 is injected into each cavity FE, to fill the cavity FE with the molten resin 55M and thus form each of the resin members 50. More specifically, the molten resin 55M is injected from each gate GT into each of the two inner portion molding cavities FB, to spread throughout the entire inner portion molding cavity FB and the entire outer portion molding cavity FA connected to the inner portion molding cavity FB. At this time, since the bump and dip molding portion DBw is provided on the inner molding surface DBn of the inner surface molding portion DB 1 of the lower die DB, the flow of the molten resin 55M is disturbed, and the direction of the glass fibers of the filler 58 in the molten resin 55M is varied, compared to the case where the bump and dip molding portion DBw is not provided.

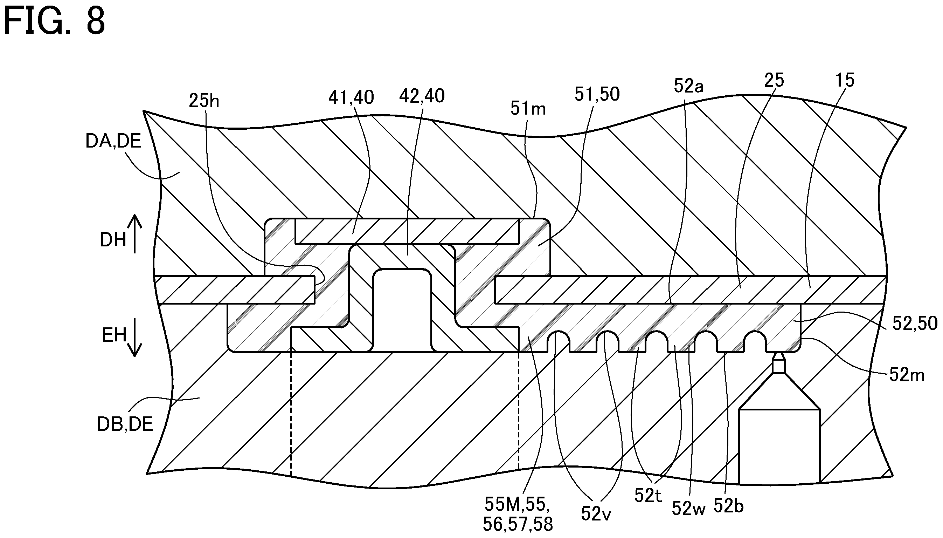

That is, when the bump and dip molding portion DBw is not provided, the molten resin 55M flows mainly in the longitudinal direction of the resin inner portion 52 (the lateral direction in FIG. 7 and FIG. 8, the battery width direction BH in a state where the battery 1 is constructed); therefore, the filler 58 in the molten resin 55M is also oriented along the flow of the molten resin 55M (that is, the glass fibers of the filler 58 are oriented so that the longitudinal direction of the glass fibers of the filler 58 is parallel to the flow of the molten resin 55M). In contrast, in the first embodiment, the bump and dip molding portion DBw causes turbulence in the flow of the molten resin 55M, and therefore, the direction of the glass fibers of the filler 58 in the molten resin 55M is varied.

Then, the molten resin 55M is cooled, and the resin member 50 to which the case lid member 25 and the terminal member 40 are hermetically joined is molded. Specifically, the molten resin 55M filling the entire cavity FE is cooled, to mold the resin inner portion 52 in the inner portion molding cavity FB and mold the resin outer portion 51 in the outer portion molding cavity FA, so that two resin members 50 each consisting of the resin inner portion 52 and the resin outer portion 51 are respectively molded (see FIG. 8). Thus, the resin members 50 are molded in which the direction of the glass fibers of the filler 58 is varied by a larger degree than that in the case where there is no bump and dip molding portion DBw. Then, the upper die DA is moved upward, and a lid assembly 15 in which the positive and negative terminal members 40 are fixed to the case lid member 25 via the resin members 50 is taken out of the lower die DB.

Then, in "electrode body connecting step S3" (see FIG. 6), the electrode body 30 obtained by stacking the positive electrode sheets 31, negative electrode sheets 32, and separators 33 is prepared, and the extension 45 of the terminal member 40 of the positive electrode as a part of the above-mentioned lid assembly 15 is ultrasonically welded to the positive current collector 30c of the electrode body 30. Also, the extension 45 of the terminal member 40 of the negative electrode as a part of the lid assembly 15 is ultrasonically welded to the negative current collector 30d of the electrode body 30. The electrode body 30 is then wrapped with the bag-like insulating holder 7.

Then, in "electrode body housing and case forming step S4", the case body 20 is prepared, the electrode body 30 covered with the insulating holder 7 is inserted into the case body 20, and the opening portion 20c of the case body 20 is closed with the case lid member 25. Then, the opening portion 20c of the case body 20 and the peripheral portion 25f of the case lid member 25 are laser-welded hermetically over the entire circumference to form the case 10 in which the electrode body 30 is housed.

Then, in "pouring and sealing step S5", the electrolyte 5 is poured into the case 10 through the liquid inlet 25k, so that the electrode body 30 is impregnated with the electrolyte 5. Then, the liquid inlet 25k is covered from the outside with the sealing member 12, and the sealing member 12 is hermetically laser-welded to the case 10.

Then, in "initial charging and aging step S6", a charging device (not shown) is connected to the battery 1, to perform initial charging on the battery 1. Then, the battery 1 is left to stand for a predetermined time so that the battery 1 is aged. In this manner, the battery 1 is completed.

In the method of manufacturing the battery 1 described above, in the insert molding step S2, the bump and dip molding portion DBw provided on the inner portion molding surface FBn of the inner portion molding cavity FB disturbs the flow of the molten resin 55M, and causes variation in the direction of the glass fibers of the filler 58 included in the molten resin 55M. Therefore, the resin member 50 in which the direction of the glass fibers of the filler 58 is more varied compared to the case where the bump and dip molding portion DBw is not provided on the inner portion molding surface FBn can be molded. Thus, the battery 1 with less anisotropy in the characteristics of the resin members 50 can be manufactured.

Furthermore, in the first embodiment, the numerous bump molding portions DBt and dip molding portions DBv that make up the bump and dip molding portion DBw are arranged in the zigzag pattern; therefore, the direction of the glass fibers of the filler 58 in the molten resin 55M can be further varied, and the resin members 50 in which the direction of the glass fibers of the filler 58 is further varied can be molded. Thus, the battery 1 with less anisotropy in the characteristics of the resin members 50 can be manufactured.

### Second Embodiment

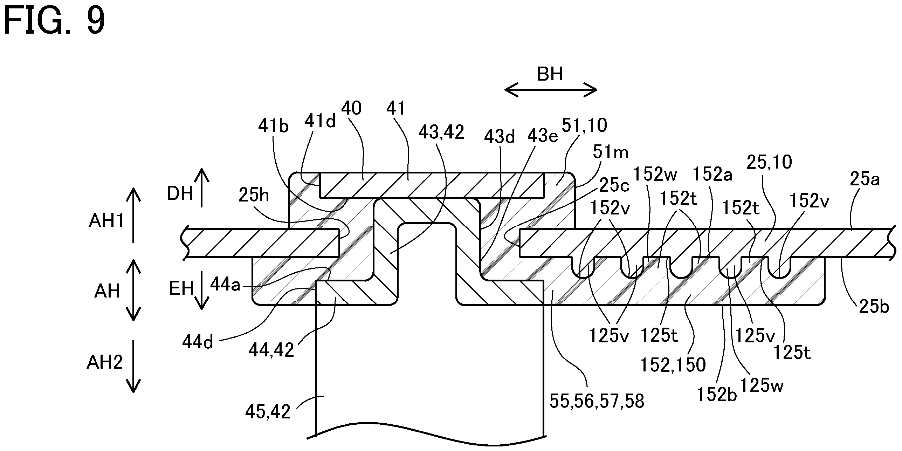

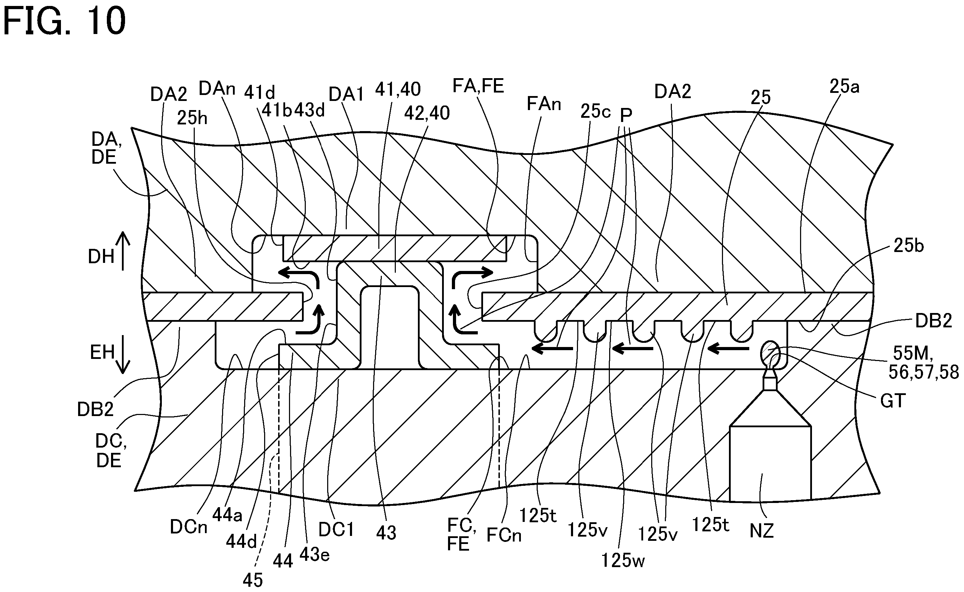

Next, a second embodiment will be described (see FIG. 9 and FIG. 10). Description of portions of the second embodiment similar to those of the first embodiment will be omitted or simplified.

In the battery 1 of the first embodiment, the resin inner surface 52b, out of the resin inner surface 52b and resin joint surface 52a of the resin inner portion 52, is provided with the uneven region 52w. In contrast, in a battery 100 of the second embodiment, a resin joint surface 152a, out of resin inner surface 152b and resin joint surface 152a of a resin inner portion 152, is provided with an uneven region 152w.

In the method of manufacturing the battery 1 according to the first embodiment, the lower die DB of the molding die DE is provided with the bump and dip molding portion DBw, and the resin inner portion 52 having the uneven region 52w is molded. In contrast, in the method of manufacturing the battery 100 according to the second embodiment, the inner surface 25b of the case lid member 25 is provided with a bump and dip molding portion 125w, and the resin inner portion 152 having the uneven region 152w is molded.

Specifically, in a resin member 150 according to the second embodiment, the configuration of the resin outer portion 51 is the same as that of the resin outer portion 51 of the first embodiment, but the configuration of the resin inner portion 152 is different from the resin inner portion 52 of the first embodiment. More specifically, the resin inner portion 152 is generally in the form of a rectangular plate, and has the resin inner surface 152b that faces the inside EH, and the resin joint surface 152a that faces the outside DH and is joined to the case lid member 25. In the second embodiment, the resin joint surface 152a, out of the resin joint surface 152a and the resin inner surface 152b, is provided with the uneven region 152w in which numerous bumps 152t and dips 152v are arranged in a zigzag pattern. Then, the molding of the uneven region 152w causes variation in the direction of the glass fibers of the filler 58 included in the resin inner portion 152 of the resin member 150.

In addition, the inner surface 25b of the case lid member 25 is provided with the bump and dip molding portion 125w corresponding in shape to the uneven region 152w of the resin j oint surface 152a of the resin inner portion 152. Specifically, the bump and dip molding portion 125w has numerous bump molding portions 125t for molding numerous bumps 152t and numerous dip molding portions 125v for molding numerous dips 152v, and the bump molding portions 125t and dip molding portions 125v are arranged in a zigzag pattern.

In the battery 100 of the second embodiment, the uneven region 152w is provided on the resin joint surface 152a of the resin inner portion 152 of the resin member 150, and the molding of the uneven region 152w causes variation in the direction of the glass fibers of the filler 58 included in the resin inner portion 152. Therefore, the direction of the glass fibers of the filler 58 is varied in the resin inner portion 152 after molding, and there is less anisotropy in the characteristics (such as the linear expansion coefficient and the strength) of the resin member 150. In particular, the bumps 152t and dips 152v that make up the uneven region 152w are arranged in a zigzag pattern; therefore, the anisotropy in the characteristics of the resin member 150 is particularly small. The other portions of the second embodiment similar to those of the first embodiment yield substantially the same effects as those of the first embodiment.

Next, a method of manufacturing the battery 100 will be described. In the second embodiment, the terminal forming step S1 is carried out, using the case lid member 25 having the bump and dip molding portion 125w on the inner surface 25b, to form the terminal member 40.

Then, in the insert molding step S2, a pair of resin members 150 is insert-molded, using the resin material 55 (see FIG. 10). Of the molding die DE, the upper die DA is the same as the upper die DA of the first embodiment, but a lower die DC is different from the lower die DB of the first embodiment. That is, the lower die DC of the second embodiment has no bump and dip molding portion on the inner molding surface DCn of the inner surface molding portion DC1, and the inner molding surface DCn is flat.

In the second embodiment, the lower die DC, the case lid member 25 having the bump and dip molding portions 125w, and the terminal members 40 form a pair of inner portion molding cavities FC for molding the resin inner portions 52 of the resin members 50. Specifically, an inner portion molding surface FCn that defines each inner portion molding cavity FC is formed by the inner molding surface DCn of the inner surface molding portion DC1 of the lower die DC, the inner surface 25b of the case lid member 25 having the bump and dip molding portion 125w, the outer surface 44a and outer circumferential surface 44d of the flange 44 of the terminal inner portion 42, and the lower part outer circumferential surface 43e of the protrusion 43 of the terminal inner portion 42.

When the molten resin 55M is injected from the gate GT into the inner portion molding cavity FC in the insert molding step S2, the bump and dip molding portion 125w provided on the inner surface 25b of the case lid member 25 disturbs the flow of the molten resin 55M, and causes variation in the direction of the glass fibers of the filler 58 in the molten resin 55M. Therefore, the resin member 150 is molded such that the direction of the glass fibers of the filler 58 is varied.

In the method of manufacturing the battery 100 of the second embodiment, in the insert molding step S2, the bump and dip molding portion 125w provided on the inner surface 25b of the case lid member 25 disturbs the flow of the molten resin 55M and causes variation in the direction of the glass fibers of the filler 58. Therefore, the resin member 150 in which the direction of the glass fibers of the filler 58 is varied can be molded, and the battery 100 with less anisotropy in the characteristics of the resin members 150 can be manufactured. In particular, the numerous bump molding portions 125t and dip molding portions 125v that make up the bump and dip molding portion 125w are arranged in the zigzag pattern; therefore, the direction of the glass fibers of the filler 58 in the molten resin 55M can be further varied, and the resin member 50 in which the direction of the glass fibers of the filler 58 is further varied can be molded. The other portions of the second embodiment similar to those of the first embodiment yield substantially the same effects as those of the first embodiment.

### Third Embodiment

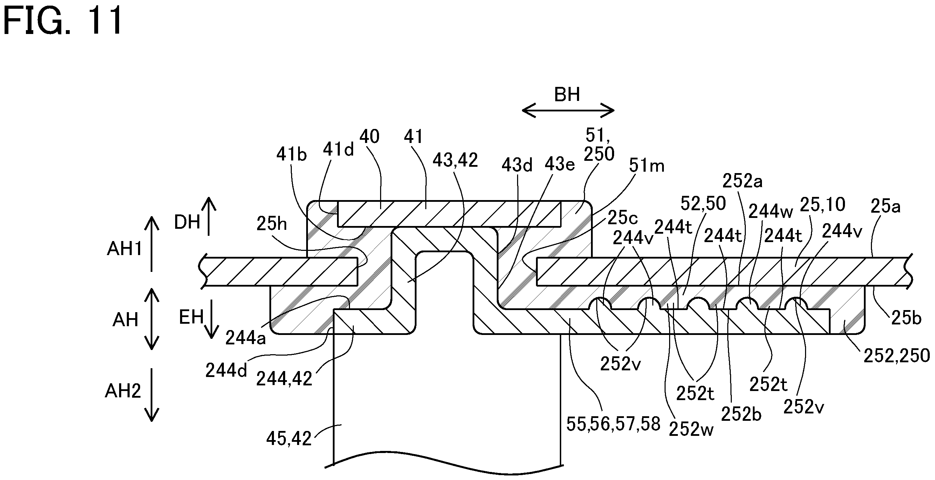

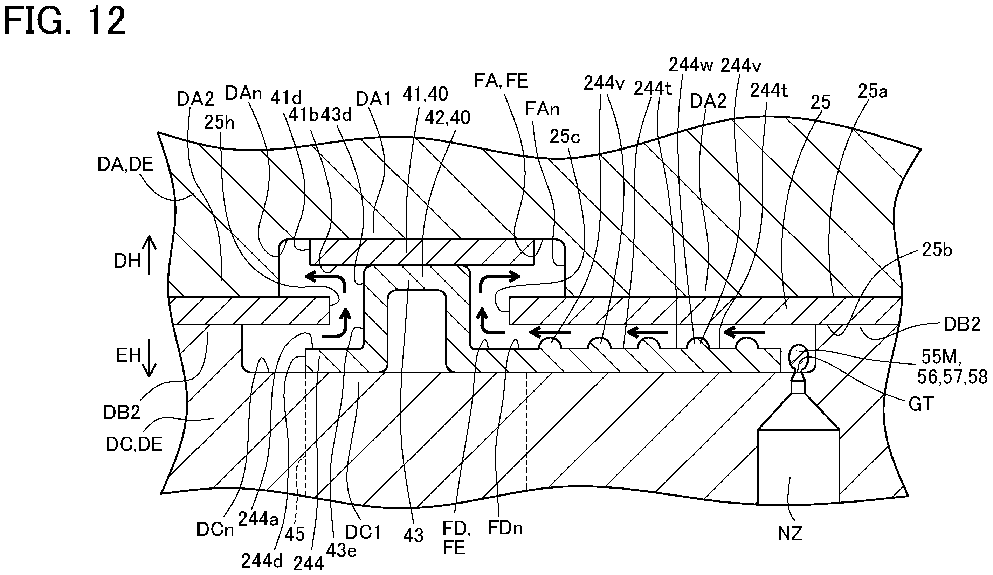

Next, a third embodiment will be described (see FIG. 11 and FIG. 12). Description of portions of the third embodiment similar to those of the first or second embodiment will be omitted or simplified. In a battery 200 of the third embodiment, a resin inner surface 252b, out of the resin inner surface 252b and resin joint surface 252a of a resin inner portion 252, is provided with an uneven region 252w, as in the first embodiment. However, in the third embodiment, the bump and dip molding portion is not provided on the lower die of the molding die DE as in the first embodiment, but a bump and dip molding portion 244w is provided on a flange 244 of the terminal inner portion 42 of the terminal member 40, for molding the resin inner portion 252 having the uneven region 252w, unlike the first embodiment.

Specifically, in the terminal member 40 according to the third embodiment, the configuration of the flange 244 of the terminal inner portion 42 is different from that of the flange 44 of the first and second embodiments. More specifically, the flange 244 of the third embodiment is longer in the battery width direction BH than the flange 44 of the first and second embodiments, and an outer surface 244a of the flange 244 is joined over a large area to the resin inner surface 252b of the resin inner portion 252 of the resin member 250. The outer surface 244a of the flange 244 is provided with the bump and dip molding portion 244w in which numerous bump molding portions 244t and numerous dip molding portions 244v are arranged in a zigzag pattern.

The resin member 250 according to the third embodiment consists of the resin outer portion 51 similar to that of the first embodiment, and the resin inner portion 252 that is somewhat different in shape from that of the first embodiment and is joined over a large area to the outer surface 244a of the flange 244 of the terminal member 40. The resin inner portion 252 is generally in the form of a rectangular plate, and has the resin inner surface 252b that faces the inside EH and the resin joint surface 252a that faces the outside DH. On the resin inner surface 252b of the third embodiment is provided the uneven region 252w in which numerous bumps 252t and dips 252v are arranged in a zigzag pattern and which corresponds to the bump and dip molding portion 244w of the outer surface 244a of the flange 244.

In the battery 200 of the third embodiment, the uneven region 252w is provided on the resin inner surface 252b of the resin inner portion 252 of the resin member 250, and molding of the uneven region 252w causes variation in the direction of the glass fibers of the filler 58 included in the resin inner portion 252. Therefore, the direction of the glass fibers of the filler 58 is varied in the resin inner portion 252 after molding, and there is less anisotropy in the characteristics of the resin member 250. The other portions of the third embodiment similar to those of the first or second embodiment yield substantially the same effects as those of the first or second embodiment.

Next, a method of manufacturing the battery 200 will be described. In the third embodiment, the terminal forming step S 1 is carried out using the terminal inner portion 42 having the bump and dip molding portion 244w on the flange 244, to form the terminal member 40.

Then, in the insert molding step S2, a pair of resin members 250 is insert-molded using the resin material 55 (see FIG. 12). The molding die DE has the upper die DA and the lower die DC similar to those of the second embodiment.

In the third embodiment, the lower die DC, the case lid member 25, and the terminal members 40 having the bump and dip molding portions 244w form a pair of inner portion molding cavities FD for molding the resin inner portions 252 of the resin members 250. Specifically, an inner portion molding surface FDn that defines each of the inner portion molding cavities FD is formed by the inner molding surface DCn of the inner surface molding portion DC1 of the lower die DC, the inner surface 25b of the case lid member 25, the outer surface 244a with the bump and dip molding portion 244w and the outer circumferential surface 244d of the flange 244 of the terminal inner portion 42, and the lower part outer circumferential surface 43e of the protrusion 43 of the terminal inner portion 42.

When the molten resin 55M is injected from the gate GT into the inner portion molding cavity FD in the insert molding step S2, the bump and dip molding portion 244w provided on the outer surface 244a of the flange 244 disturbs the flow of the molten resin 55M, and causes variation in the direction of the glass fibers of the filler 58 in the molten resin 55M. Therefore, the resin member 250 is molded such that the direction of the glass fibers of the filler 58 is varied.

In the method of manufacturing the battery 200 of the third embodiment, in the insert molding step S2, the bump and dip molding portion 244w provided on the flange 244 of the terminal inner portion 42 of the terminal member 40 disturbs the flow of the molten resin 55M and causes variation in the direction of the glass fibers of the filler 58. Therefore, the resin member 250 in which the direction of the glass fibers of the filler 58 is varied can be molded, and the battery 200 with less anisotropy in the characteristics of the resin member 250 can be manufactured. The other portions of the third embodiment similar to those of the first or second embodiment yield substantially the same effects as those of the first or second embodiment.

While the disclosure has been described in the light of the first to third embodiments, it is to be understood that the disclosure is not limited to the first to third embodiments, but may be applied by making changes as needed, without departing from the principle of the disclosure.

### Reference Signs List

- 1, 100, 200: Battery (Power storage device)
- 10: Case
- 25: Case lid member (Case member)
- 25h: Insertion hole
- 40: Terminal member
- 50, 150, 250: Resin member
- 51: Resin outer portion
- 52, 152, 252: Resin inner portion
- 52a, 152a, 252a: Resin joint surface
- 52b, 152b, 252b: Resin inner surface
- 52w, 152w, 252w: Uneven region
- 52t, 152t, 252t: Bump
- 52v, 152v, 252v: Dip
- 55: Resin material
- 55M: Molten resin
- 56: Main resin
- 58: Filler
- DH: Outside (of case lid member)
- EH: Inside (of case lid member)
- DE: Molding die
- DBw: Bump and dip molding portion (provided on molding die)
- DBt: Bump molding portion (provided on molding die)
- DBv: Dip molding portion (provided on molding die)
- 125w: Bump and dip molding portion (provided on case lid member)
- 125t: Bump molding portion (provided on case lid member)
- 125v: Dip molding portion (provided on case lid member)
- 244w: Bump and dip molding portion (provided on flange of terminal member)
- 244t: Bump molding portion (provided on flange of terminal member)
- 244v: Dip molding portion (provided on flange of terminal member)
- FB, FC, FD: Inner portion molding cavity
- FBn, FCn, FDn: Inner portion molding surface
- S2: Insert molding step
- S21: Cavity forming step
- S22: Injection molding step

## Claims

1. A power storage device (1;100;200) comprising:
a case member (25) including an insertion hole (25h);
a terminal member (40) inserted through the insertion hole (25h) of the case member (25); and
a resin member (50;150;250) that is hermetically joined to the case member (25) and the terminal member (40) while insulating the case member (25) and the terminal member (40) from each other, to fix the terminal member to the case member, the resin member (50;150;250) comprising a resin material (55) including a thermoplastic main resin (56) and a fibrous filler (58) consisting of numerous fibers and subjected to insert molding,
wherein the resin member (50;150;250) has a resin inner portion (52;152;252) located on the inside (EH) of the case member (25), and a resin outer portion (51) that extends from the resin inner portion (52;152;252) to the outside (DH) of the case member (25) through the insertion hole (25h), the resin inner portion (52; 152; 252) having a resin inner surface (52b;152b;252b) that faces the inside (EH) and a resin joint surface (52a;152a;252a) that faces the outside (DH) and is joined to the case member (25), and
wherein at least one of the resin inner surface (52b;152b;252b) and the resin joint surface (52a;152a;252a) of the resin inner portion (52;152;252) is provided with an uneven region (52w;152w;252w), and molding of the uneven region causes variation in the direction of the fibers of the filler included in the resin inner portion (52;152;252).

2. The power storage device (1;100;200) according to claim 1, wherein the uneven region (52w;152w;252w) comprises numerous bumps (52t;152t;252t) and dips (52v;152v;252v) that are arranged in a zigzag pattern.

3. A method of manufacturing a power storage device (1;100;200) including a case member (25) including an insertion hole (25h), a terminal member (40) inserted through the insertion hole (25h) of the case member (25), and a resin member (50;150;250) that is hermetically joined to the case member (25) and the terminal member (40) while insulating the case member and the terminal member from each other, to fix the terminal member (40) to the case member (25), the resin member (50;150;250) comprising a resin material (55) including a thermoplastic main resin (56) and a fibrous filler (58) consisting of numerous fibers and subjected to insert molding, wherein the resin member (50;150;250) has a resin inner portion (52;152;252) located on the inside (EH) of the case member (25), and a resin outer portion (51) that extends from the resin inner portion (52;152;252) to the outside (DH) of the case member (25) through the insertion hole (25h), the resin inner portion (52;152;252) having a resin inner surface (52b;152b;252b) that faces the inside (EH) and a resin j oint surface (52a;152a;252a) that faces the outside (DH) and is joined to the case member (25), and wherein at least one of the resin inner surface (52b;152b;252b) and the resin joint surface (52a;152a;252a) of the resin inner portion (52;152;252) is provided with an uneven region (52w;152w;252w) and molding of the uneven region causes variation in the direction of the fibers of the filler (58) included in the resin inner portion (52;152;252), the method comprising
insert molding (S2) of performing the insert molding of the resin member (50;150;250) using the resin material (55) in a condition where the terminal member (40) is inserted through the insertion hole (25h) of the case member (25),
wherein the insert molding (S2) comprises cavity forming (S21) of forming a cavity (FE) for molding the resin member (50;150;250) by a molding die (DE), the case member (25), and the terminal member (40), and injection molding (S22) of injecting a molten resin (55M) of the resin material (55) into the cavity (FE) to fill the cavity (FE) with the molten resin (55M) and mold the resin member (55),
wherein the cavity (FE) has an outer portion molding cavity (FA) for molding the resin outer portion (51) and an inner portion molding cavity (FB;FC;FD) for molding the resin inner portion (51; 152;252), and an inner portion molding surface (FBn;FCn;FDn) that defines the inner portion molding cavity (FB;FC;FD) has a bump and dip molding portion (DBw) with which the uneven region (52w;152w;252w) is molded, and
wherein the injection molding (S22) comprises molding the resin inner portion (52;152;252) having the uneven region (52w;152w;252w), while causing the bump and dip molding portion (DBw;125w;244w) to disturb flow of the molten resin (55M) and vary the direction of the fibers of the filler (58) included in the molten resin.

4. The method according to claim 3, wherein:
the uneven region (52w;152w;252w) comprises numerous bumps (52t;152t;252t) and dips (52v;152v;252v) that are arranged in a zigzag pattern; and
the bump and dip molding portion (DBw;125w;244w) comprises numerous bump molding portions (DBt;125t;244t) and dip molding portions (DBv;125v;244v) that are arranged in a zigzag pattern.
